# EUROPÄISCHE PATENTSCHRIFT

(11) **EP 4 248 724 B1**
(45) Veröffentlichungstag und Bekanntmachung des Hinweises auf die Patenterteilung: **04.09.2024**
(21) Anmeldenummer: 23153371.2
(22) Anmeldetag: 26.01.2023
(51) Int. Cl.: A01B 51/02, B60B 35/00, A01B 69/04, B60B 35/10

(54) **ROBOTER SOWIE VERFAHREN ZUR AUTONOMEN BEARBEITUNG EINER LANDWIRTSCHAFTLICHEN FLÄCHE SOWIE ROBOTERSYSTEM**
ROBOT AND METHOD FOR AUTONOMOUSLY PROCESSING AN AGRICULTURAL AREA AND ROBOT SYSTEM
ROBOT ET PROCÉDÉ DE TRAITEMENT AUTONOME D'UNE SURFACE AGRICOLE AINSI QUE SYSTÈME DE ROBOT

(30) Priorität: 22.03.2022 DE 102022202806
(43) Veröffentlichungstag der Anmeldung: 27.09.2023
(73) Patentinhaber: Soldner, Patrick, 91522 Ansbach (DE); Schönleben, Günther, 91622 Rügland (DE)
(72) Erfinder: Soldner, Patrick, 91522 Ansbach (DE); Schönleben, Günther, 91622 Rügland (DE)
(74) Vertreter: FDST Patentanwälte

(56) Entgegenhaltungen:
- WO-A1-2021/238421
- CN-A- 109 367 636
- DE-A1- 102018 213 644
- DE-A1- 102020 100 485

## Beschreibung

Die Erfindung betrifft einen Roboter sowie ein Verfahren zur autonomen Bearbeitung einer landwirtschaftlichen Fläche mit in Reihen angeordneten Pflanzen, wobei die Reihen zueinander einen Reihenabstand und die Pflanzen in einer Reihe zueinander einen Pflanzabstand aufweisen. Die Erfindung betrifft weiterhin ein Robotersystem mit einem solchen Roboter.

Derartige Roboter zur autonomen, also automatischen Bearbeitung von landwirtschaftlichen Flächen, ohne dass das landwirtschaftliche Gerät, also hier der Roboter manuell durch einem Bediener gesteuert werden muss, sind in vielfältigen Ausführungsformen bekannt. So ist beispielsweise aus der EP 3 534 183 A1 ein Agrarsystem mit mehreren Teil- oder vollautonom betriebenen Arbeitsmaschinen bekannt. Weitere Robotersysteme, die zumindest Teilaufgaben automatisch durchführen sind beispielsweise zu entnehmen aus der US 2018/153084 A, der WO 2021/138704 A1, der WO 2017/161431 A1, oder der US 6 671 582 B.

Weitere Roboter für den Agrarbereich sind beispielsweise zu entnehmen DE 10 2018 213 644 A1, CN 109 367 636 A, WO 2021/138704 A1 oder DE 10 2020 100 485 A1.

Die unterschiedlichen autonomen Geräte sind jeweils an den Anwendungszweck angepasst. Bei der automatisierten Bearbeitung von in Reihen angeordneten Pflanzen, beispielsweise bei Gemüse, Blumen oder auch Getreide, wie beispielsweise (Zucker-) Rüben, Mais usw. ist es erforderlich, dass das autonome, selbstfahrende Gerät zwischen den Reihen wechselt, um das gesamte Feld möglichst vollständig autonom bearbeiten zu können. Üblicherweise fährt das autonome Gerät hierzu bis zum Feldrand und wechselt dann die Reihen. Allerdings ist dies häufig nicht möglich, da am Feldrand eine Befahrung nicht oder nur eingeschränkt möglich ist. Ein Reihenwechsel innerhalb des Feldes führt demgegenüber typischerweise zu einer Beschädigung der Pflanzen.

Ausgehend hiervon liegt der Erfindung die Aufgabe zugrunde, eine automatisierte Bearbeitung einer landwirtschaftlichen Fläche mithilfe eines Roboters zu ermöglichen, wobei ein Reihenwechsel auch auf dem Feld und möglichst ohne Beschädigung von Pflanzen ermöglicht ist.

Die Aufgabe wird gemäß der Erfindung gelöst durch einen Roboter sowie ein Verfahren zur autonomen Bearbeitung einer landwirtschaftlichen Fläche (Feld) welches in mehreren Reihen angeordneten Pflanzen aufweist, wobei die Reihen zueinander einen Reihenabstand und die Pflanzen in einer Reihe zueinander einen Pflanzabstand aufweisen. Die Aufgabe wird weiterhin gelöst durch ein Robotersystem mit einem solchen Roboter. Die nachfolgend im Hinblick auf den Roboter angeführten Vorteile und bevorzugten Ausgestaltungen sind sinngemäß auch auf das Verfahren sowie auf das Robotersystem zu übertragen und umgekehrt.

Der Roboter weist allgemein ein Fahrgestell auf, welches zwei Achsen umfasst, nämlich eine Hinterachse sowie eine Vorderachse, die über eine mittige, sich in einer Längsrichtung erstreckende Traverse miteinander verbunden sind. Die beiden Achsen sind dabei vorzugsweise ausschließlich über diese eine mittige Traverse miteinander verbunden. Eine jeweilige Achse ist dabei an der Traverse jeweils um eine Drehachse lenkbar befestigt. Jede Achse weist weiterhin jeweils zwei lenkbare Räder auf, die jeweils um eine Lenkachse drehbar sind und von denen zumindest eines antreibbar ist. Sofern vorliegend von lenkbar gesprochen wird, so wird hierunter verstanden, dass eine jeweilige Achse beispielsweise über einen individuellen Antrieb oder auch mittelbar gesteuert um die Drehachse und ein jeweiliges Rad gesteuert um die Lenkachse verdrehbar ist. Die Räder sind vorzugsweise individuell antreibbar. Bevorzugt erfolgt das Lenken der Achsen, also deren Drehung um die Drehachse, mit Hilfe einer gezielten individuellen Ansteuerung der einzelnen Räder. Die Achsen sind daher um die Drehachse vorzugsweise frei drehbar.

Sofern vorliegend von Rädern gesprochen wird, so werden hierunter insbesondere kreisrunde Räder / Reifen im klassischen Sinn verstanden, alternativ aber auch andere Roll- oder Antriebseinheiten wie beispielsweise Raupenlaufwerke, Ketten o.Ä..

Weiterhin ist ein Aufbau vorgesehen, welcher am Fahrgestell anbringbar und im Betrieb daran angebracht ist. Speziell ist der Aufbau zur Anbringung an der Traverse vorgesehen. Je nach Einsatzzweck ist dieser Aufbau unterschiedlich ausgebildet. So umfasst der Aufbau gemäß einer ersten Ausführungsvariante ein autonom betätigbares Werkzeug zur Feldbearbeitung, beispielsweise zum Unkraut jäten, zum Auflockern der Erde usw.. Alternativ oder ergänzend weist der Aufbau eine Sensorik und/oder ein Analysegerät auf, wobei über die Sensorik beispielsweise Umweltdaten, Daten über Eigenschaften der Pflanzen oder des Bodens erfasst werden können. Hierzu zählen beispielsweise Temperatur, Feuchtigkeit oder auch sonstige Bodeneigenschaften. Mithilfe des integrierten Analysegerät können beispielsweise die von der Sensorik erfassten Daten oder gegebenenfalls auch mithilfe einer Probeentnahmevorrichtung entnommene (Boden-) Proben einer beispielsweise chemischen Analyse unterzogen werden, um beispielsweise einen Düngemittelbedarf zu ermitteln. Weiterhin ist der Aufbau alternativ oder ergänzend zur Aufnahme von einem Ausbringmittel ausgebildet. Hierzu ist der Aufbau selbst als ein Tank oder Vorratsbehälter ausgebildet oder weist zumindest einen solchen auf. Unter Ausbringmittel sind vorliegend beispielsweise sowohl Feststoffe als auch Flüssigkeiten wie Dünger oder Saatgut zu verstehen.

Schließlich weist der Roboter eine Steuereinrichtung zur Ansteuerung des Fahrgestells und zur Durchführung von autonomen Fahrmanövern auf. Für einen Reihenwechsel quer über eine Reihe hinweg ist die Steuereinrichtung nunmehr zur Durchführung eines Quer-Fahrmanövers ausgebildet. Bei diesem werden die Räder um ihre Längsachse und die Achsen jeweils um ihre Drehachse verdreht. Speziell werden die Räder hierbei quer gestellt. Hierunter wird verstanden, dass sie parallel oder zumindest weitgehend parallel (+/- maximal 20° und vorzugsweise lediglich +/- maximal 10°) zu der jeweiligen Achse orientiert sind. Unter parallel zu einer Achse (Hinterachse oder Vorderachse) orientiert bedeutet, dass die Laufrichtung der Räder in Längsrichtung der Achse und damit parallel zu dieser orientiert ist. Eine Radachse, um die das jeweilige Rad rotiert ist dabei typischerweise quer und insbesondere senkrecht zur Längsrichtung der Achse orientiert.

Durch diese spezielle Ausgestaltung des Fahrgestells, mit den beiden lediglich durch die mittige Traverse verbundenen und jeweils um ihre Drehachse lenkbaren Achsen sowie durch die um Ihre Lenkachse lenkbaren Räder sind Fahrmanöver ermöglicht, bei denen - auch bei engen Pflanzenabständen - die Räder durch eine Lücke zwischen benachbarte Pflanzen einer Reihe sicher und ohne Beschädigung der Pflanzen hindurchfahren können.

Sofern vorliegend von einer autonomen Bearbeitung gesprochen wird, so wird hierunter insbesondere verstanden, dass der Roboter derart ausgebildet ist, dass er vollautomatisch auf dem Feld verfahren kann und zumindest einige Tätigkeiten ebenfalls vollautomatisch durchführen kann. Für diese autonome Ausgestaltung ist der Roboter allgemein geeignet ausgebildet. Speziell weist das Fahrgestell verschiedene Antriebe zum Lenken der Räder und ggf. auch zum Lenken der Achsen auf. Weiterhin weist das Fahrgestell Antriebe zum insbesondere individuellen Antrieb der einzelnen Räder auf. Weiterhin weist der Roboter eine geeignete Sensorik auf, über die die Umgebung erfasst wird und in Abhängigkeit hiervon wird dann die Fahrbewegung und insbesondere auch die Bearbeitung automatisch gesteuert. Der Roboter ist dabei autark ausgebildet und weist hierzu einen Energiespeicher auf, über den die erforderliche Energie insbesondere auch für die Fahrmanöver des Fahrgestells bereitgestellt wird.

In bevorzugter Ausbildung sind die beiden Achsen jeweils in eine Querfahrposition bringbar, in der die jeweilige Achse sowie deren Räder parallel zur Traverse ausgerichtet sind. Jede der beiden Achsen wird daher bei Bedarf parallel zu der Traverse orientiert, sodass insgesamt das gesamte Fahrgestell zumindest im Bereich der parallel zur Traverse gestellten Achse extrem schlank ist und damit durch Lücken zwischen Pflanzen hindurchgeführt werden kann. Unter paralleler Ausrichtung der Räder zur Traverse wird wiederum verstanden, dass die Laufrichtung der Räder in Richtung der Traverse und damit in Längsrichtung orientiert ist.

In bevorzugter Ausgestaltung weist das Fahrgestell in der Querfahrposition und im Bereich der jeweiligen Achse, die parallel zur Traverse ausgerichtet ist, eine Breite von maximal 30 cm, insbesondere von maximal 20 cm, maximal 15 cm oder maximal von 10 cm auf. Speziell ist die Breite derart bemessen, dass sie kleiner gleich dem Pflanzabstand zweier benachbarter Pflanzen ist oder allenfalls geringfügig größer. Durch diese Maßnahme wird erreicht, dass das gesamte Fahrgestell im Bereich der parallel zur Traverse ausgerichteten Achse in die Lücke einfahren kann. Mit etwas Abstand zur Bodenfläche kann dabei die Breite des Fahrgestells durchaus etwas größer als der Pflanzenabstand sein, da die Pflanzen üblicherweise etwas elastisch sind und sich wegbiegen können.

Typische Pflanzabstände variieren je nach der angebauten Kultur und hängen häufig auch von dem Reihenabstand ab, da häufig eine Pflanzendichte entscheidend für den Ertrag ist. So liegt bei Mais der Reihenabstand typischerweise bei 75 cm und der Pflanzenabstand bei 8 - 15 cm. Bei Zuckerrüben beträgt bei einem Reihenabstand von 50 cm der Pflanzenabstand ca. 12 - 25 cm.

Um grundsätzlich mit dem Roboter entlang der Reihen verfahren zu können, ist weiterhin die Breite der Achsen (Abstand zwischen den Rädern) an den Reihenabstand angepasst. Da bei dem Querfahrmanöver zur Querung einer Reihe auch die Traverse quer zur Reihe durch diese hindurchgeführt wird, ist auch die Traverse an den Reihenabstand angepasst. Hierunter wird verstanden, dass die Achsen kleiner dem Reihenabstand sind, was bedeutet, dass die Achsen typischerweise eine Länge bis maximal 75 cm oder auch bis maximal 50 cm aufweisen. Im Falle der Traverse wird unter angepasst verstanden, dass die Traverse ebenfalls maximal dem Reihenabstand entspricht, oder alternativ vorzugsweise maximal um 10 % oder 25 % größer ist als die zuvor genannten Reihenabstände von beispielsweise 75 cm oder 50 cm. Wird der Roboter für kleinwüchsige Kulturen oder nur zu Beginn der Wachstumsphase eingesetzt, wenn die Pflanzenhöhe so gering ist, dass die Pflanzen schadlos von der Traverse überfahren werden können, so kann die Traverse auch länger sein. Das Fahrgestell weist in diesem Fall speziell im Bereich der Traverse eine Bodentiefe auf, die insbesondere größer oder gleich der maximalen Pflanzenhöhe ist. Die Bodentiefe kann dabei aufgrund der Elastizität der Pflanzen ggf. auch geringfügig z.B. um 10% geringer als die maximale Pflanzenhöhe sein.

Um eine Beschädigung der Pflanze durch den Aufbau zu vermeiden, weist dieser eine Breite von maximal 50 cm, insbesondere eine Breite von 40 cm, maximal eine Breite von 25 cm oder maximal eine Breite von 10 cm bis 15 cm auf. Gemäß einer bevorzugten Ausgestaltung kann der Aufbau zumindest auf eine derartige Maximalbreite reduziert werden, beispielsweise durch Zusammenschieben oder Zusammenklappen. Hierdurch wird sichergestellt, dass beim Queren einer Reihe die Pflanzen nicht durch den Aufbau beschädigt werden. Grundsätzlich kann der Aufbau im Vergleich zu dem Fahrgestell im Bereich der parallel zur Traverse gestellten Achse eine etwas größere Breite aufweisen, da die Pflanzen im oberen Bereich elastisch nachgiebig sind. Die Breite ist derart bemessen, dass die Pflanzen bei einer Durchfahrt elastisch dem Aufbau ausweichen, ohne jedoch beschädigt zu werden. Der Aufbau weist daher im Vergleich zu der Breite des Fahrgestells (in dem Bereich der parallel zur Traverse gestellten Achse) eine beispielsweise um 10% - 25 % größere Breite auf.

In bevorzugter Weiterbildung ist darüber hinaus vorgesehen, dass der Aufbau sich in Richtung zum Fahrgestell gesehen, also nach unten verjüngt, d. h. seine Breite reduziert sich.

In bevorzugter Ausgestaltung sind die Räder parallel zur jeweiligen Achse ausrichtbar. Hierzu sind sie unterhalb der jeweiligen Achse angeordnet, sodass sie über einen möglichst großen Bereich, vorzugsweise um zumindest 180° und insbesondere um 360° um ihre Lenkachse verstellbar sind. In der Querfahrposition sind daher die parallel ausgerichteten Räder unterhalb der jeweiligen Achse angeordnet und tragen damit nicht zusätzlich zur Breite bei.

Alternativ und insbesondere ergänzend sind die Achsen unterhalb der Traverse angeordnet, sodass eine jeweilige Achse unterhalb der Traverse um ihre Drehachse verdrehbar ist, so dass in der Querfahrposition die Achse unterhalb der Traverse angeordnet ist. Speziell ist die Achse dabei in der Querfahrposition fluchtend mit der Traverse und nicht neben dieser angeordnet. In bevorzugter Ausgestaltung steht die Achse in der Querfahrposition seitlich nicht über oder allenfalls beidseitig in gleichem Maß über die Traverse über.

In bevorzugter Ausgestaltung ist die Steuereinrichtung zur Durchführung eines Fahrmanövers eingerichtet, bei dem das Fahrgestell einen Wechsel zwischen den Reihen ausführt und hierbei eine jeweilige Achse mit den zugehörigen Rädern durch eine Lücke zwischen zwei Pflanzen manövriert wird. Eine jeweilige Achse mit den zugehörigen Rädern quert also durch eine einzige Lücke die Reihe.

Hierbei ist gemäß einer Variante vorgesehen, dass die beiden Achsen durch verschiedene Lücken manövriert werden. Dieses Fahrmanöver ist bei kleinen Pflanzenhöhen dann möglich, wenn die Traverse auf Höhe oder oberhalb der Pflanzen liegt und somit über diese hinweg fahren kann. Bei Bedarf werden dabei die beiden Achsen durch Verdrehen um ihre Drehachsen parallel zueinander versetzt, um den Abstand der Achsen in Übereinstimmung mit einem Abstand der Lücken zu bringen, durch den die beiden Achsen verfahren werden sollen.

Gemäß einer bevorzugten Alternative hierzu ist die Steuereinrichtung darüber hinaus derart eingerichtet, dass beide Achsen durch die gleiche Lücke hindurch manövriert werden. Hierzu ist insbesondere ein Fahrmanöver vorgesehen, bei dem die beiden Achsen nacheinander in Querfahrposition ausgerichtet werden, wobei sich die eine Achse jeweils in einer Querfahrposition und die andere Achse in einer Stabilisierungsposition befindet, bei der die Achse quer zur Traverse orientiert ist.

Zum Durchfahren einer Lücke werden daher eine jeweilige Achse zusammen mit den Rädern temporär in die Querfahrposition gebracht.

In bevorzugter Ausgestaltung wird die Traverse - vor einem Einfahren der Achse in eine Lücke und/oder vor einem (vollständigen) Ausfahren der jeweiligen Achse aus der Lücke - relativ zu dieser Achse, die momentan die Reihe quert und durch die Lücke fährt, schräg gestellt. Hierdurch wird also die Traverse und mit ihr die gegenüberliegende Achse (die momentan nicht durch die Lücke fährt) zumindest stückweise in Richtung der Reihen verdreht, sodass verhindert ist, dass die gegenüberliegende Achse die Pflanzen der gegenüberliegenden Reihe beschädigt.

Weiterhin ist in bevorzugter Ausgestaltung vorgesehen, dass sich die andere Achse jeweils in der bereits erwähnten Stabilisierungsposition befindet, während sich die Achse, die momentan durch die Lücke fährt, in der Querfahrposition befindet.

Beim Fahrmanöver zum Queren einer Reihe weist das Fahrgestell in der Querfahrposition daher jeweils in - Aufsicht betrachtet - eine in etwa T-förmige Ausrichtung der beiden Achsen und der Traverse auf. Mit dieser T-förmigen Ausrichtung verfährt das Fahrgestell jeweils ein Stück weit quer zur Reihe durch diese hindurch. Anschließend, beispielsweise wenn die Traverse um eine halbe Achslänge durch die Reihe hindurch gefahren ist, wird die zuvor parallel zur Traverse orientierte Achse wieder um die Traverse verdreht, sodass sie quer in die Stabilisierungsposition gestellt wird und die Stabilisierungsfunktion übernimmt. Anschließend wird die andere Achse parallel zur Traverse ausgerichtet und das Fahrgestell kann vollständig durch die Reihe hindurch verfahren.

Allgemein ist zum autonomen Betrieb des Roboters, speziell zur autonomen Durchführung der hier beschriebenen Fahrmanöver ein geeignetes Sensorsystem vorgesehen, über welches die eigene Position des Fahrgestells, speziell auch die Positionen der Achsen, der Räder und der Traverse erfasst werden. Insbesondere werden mithilfe von Sensoren des Sensorsystems die Eigenpositionen der einzelnen Teile und/oder des gesamten Fahrgestells in Relation zu einer jeweiligen Reihe und/oder zu den individuellen Pflanzen erfasst. In Abhängigkeit dieser erfassten Positionsdaten wird dann mithilfe der Steuereinrichtung das Fahrgestell geeignet angesteuert. Das Sensorsystem umfasst hierzu insbesondere auch eine geeignete Sensorik, beispielsweise ein Lasersystem oder ein Kamerasystem zur Erfassung der Position, beispielsweise eine Relativposition oder auch eine Absolutposition speziell der Pflanzen und/ oder des Fahrgestells.

Für die automatisierte Bearbeitung des Feldes ist im Hinblick auf das erwähnte Werkzeug in bevorzugter Ausgestaltung vorgesehen, dass dieses in einer linearen Bewegung quer zur Traverse verfahrbar ist. Das Werkzeug weist hierzu beispielsweise einen ausfahrbaren Teleskoparm auf. Hierdurch kann das Werkzeug in einfacher Weise zwischen die Pflanzen hinein verfahren werden, um beispielsweise den Boden zu lockern oder Unkraut zu jäten.

Insgesamt weist das Fahrgestell (ohne Aufbau) generell eine lediglich geringe Höhe von beispielsweise maximal 30 cm oder maximal 40 cm auf. Durch diese geringe Höhe ist ein seitliches lineares Ausfahren ausreichend und problemlos ermöglicht. Grundsätzlich kann das Fahrgestell auch höher sein.

In einer Ausführungsvariante, insbesondere bei höher bauenden Fahrgestellen, ist das Werkzeug unterhalb, also in Richtung zum Boden, am Fahrgestell, speziell an der Traverse angebracht. Insbesondere kann das Werkzeug unterhalb des Fahrgestells, speziell der Traverse in eine Parkposition gebracht werden.

Weiterhin ist in bevorzugter Ausgestaltung der Roboter mit einem Datenübertragungssystem zur Übertragung von Daten zu einem entfernten Ort ausgestattet. Dabei handelt es sich beispielsweise um ein funkbasiertes System.

Wie bereits erwähnt, ist der Roboter in bevorzugter Ausgestaltung mit einem Kamerasystem ausgestattet. Die Kameradaten werden einerseits insbesondere zur autonomen Steuerung der Fahrmanöver herangezogen. Alternativ oder ergänzend werden die Kameradaten an einen entfernten Ort übertragen. Hierdurch ist die Überwachung des Roboters, insbesondere seine Funktionsfähigkeit von einem entfernten Ort möglich.

Gemäß einer weiteren bevorzugten Ausgestaltung ist eine manuelle Steuerungseinrichtung für einen manuellen Betrieb des Fahrgestells und/oder der am Aufbau angebrachten Komponenten ermöglicht. Über eine manuelle Steuerung des Fahrgestells kann dieses beispielsweise bei einer Fehlfunktion wieder in Betrieb genommen werden. Diese manuelle Steuerung ist dabei vorzugsweise über eine Fernsteuerung, beispielsweise über eine App durchführbar. Hierzu wird insbesondere auf die Kameradaten zurückgegriffen.

Ergänzend oder alternativ ist ein Tracking-System zur Nachverfolgung der aktuellen Position des Roboters vorgesehen.

Weiterhin weist der Roboter in bevorzugter Ausgestaltung eine Kupplung zum Koppeln mit einem weiteren Roboter oder mit einem Anhänger auf. Grundsätzlich besteht auch die Möglichkeit, dass der Roboter mehr als zwei Achsen aufweist. Der Roboter ist dann beispielsweise insgesamt als ein Gelenkarmroboter ausgebildet, bei dem einzelne Traversenabschnitte zwischen zwei Achsen gelenkig miteinander verbunden sind. Ein derartiger mehrgliedriger und mehrachsiger Roboter oder mit einem Anhänger versehener Roboter ermöglicht die Aufnahme von mehreren Komponenten oder auch von größeren Vorräten an Ausbringungsmittel.

Das erfindungsgemäße Robotersystem weist zunächst ein oder auch mehrere der zuvor beschriebenen Roboter auf. Insbesondere ist eine Versorgungseinrichtung vorgesehen, die vom Roboter anfahrbar ist und die zum autonomen und automatischen Auffüllen oder Austauschen eines am Roboter befindlichen Speichers für Energie oder Ausbringmittel ausgebildet ist. Speziell handelt es sich beispielsweise hierbei um eine Tank- oder Ladestation zum Auffüllen eines Energievorrates, beispielsweise zum Laden einer Batterie oder auch zum Betanken eines Speichers mit Treibstoff, beispielsweise für Wasserstoff. Der Treibstoff wird insbesondere für eine Brennstoffzelle eingesetzt, über die der Roboter mit elektrischer Energie versorgt wird. Alternativ oder ergänzend wird über die Versorgungseinrichtung Saatgut, Düngemittel usw. bereitgestellt.

Ein Ausführungsbeispiel der Erfindung wird nachfolgend anhand der Figuren näher erläutert. Diese zeigen in vereinfachten, schematisierten Darstellungen:
- FIG 1: eine Draufsicht auf ein Feld mit in Reihen angeordnete Pflanzen und einem Roboter,
- FIG 2: eine Seitenansicht des Roboters,
- FIG 3A - 3H: Draufsichten auf das Feld mit dem Roboter zur Erläuterung eines Fahrmanövers zur Querung einer Reihe.

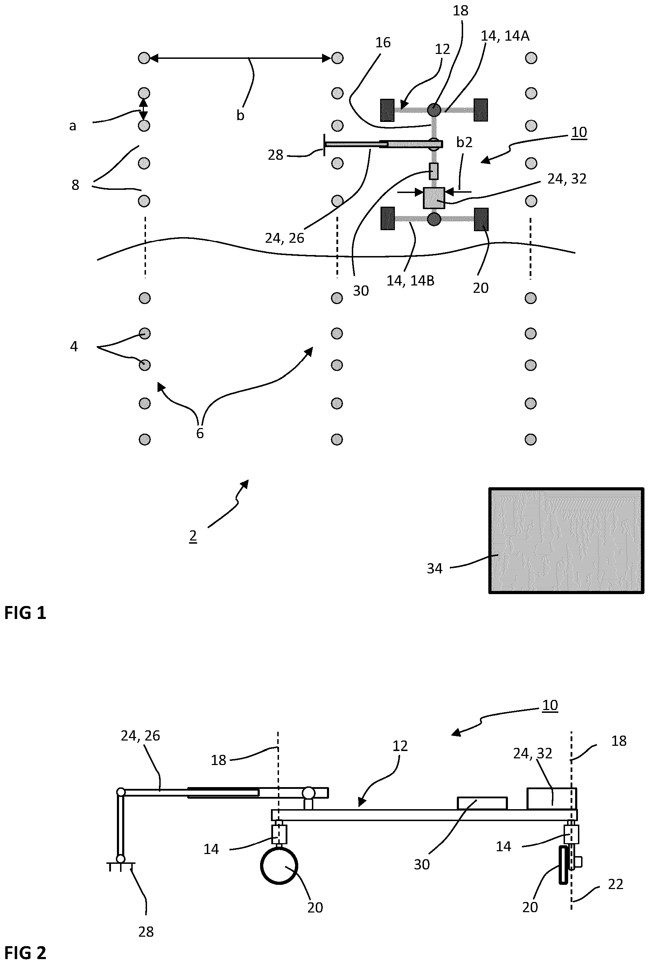

Ein in der FIG 1 dargestelltes Feld 2 (landwirtschaftliche Fläche) weist eine Reihenkultur mit Pflanzen 4 auf, die in Reihen 6 angepflanzt sind. Innerhalb einer Reihe 6 weisen benachbarte Pflanzen 4 einer Pflanzenabstand a auf. Durch diesen Pflanzenabstand a ist zwischen benachbarten Pflanzen 4 eine Lücke 8 definiert. Die Reihen 6 weisen zueinander einen Reihenabstand b auf.

Zur autonomen Bearbeitung des Feldes 2 ist ein Roboter 10 vorgesehen, dessen Aufbau insbesondere auch aus der FIG 2 hervorgeht. Dieser weist ein Fahrgestell 12 mit zwei Achsen 14 auf, nämlich eine Vorderachse 14A und eine Hinterachse 14B, die über eine einzige, mittig angeordnete Traverse 16 miteinander verbunden sind. Die Achsen 14 und die Traverse 16 sind als Tragbauteile, beispielsweise als Holme ausgebildet. Die Tragbauteile bestehen beispielsweise aus Metall oder auch aus Kunststoff oder Verbundwerkstoffen. Insbesondere werden Kunststoffprofile eingesetzt. Die beiden Achsen 14 sind an den gegenüberliegenden Enden der Traverse 16 an dieser jeweils um eine Drehachse 18 drehbar befestigt. Hierzu ist insbesondere ein Lager vorgesehen, um das die Achsen 14 relativ zur Traverse 16 frei drehen können. An einer jeden Achse 14 sind jeweils zwei Räder 20 angebracht, die jeweils um eine Lenkachse 22 dreh- und lenkbar befestigt sind. Die Drehachsen 18 sowie die Lenkachse 22 sind zueinander parallel angeordnet. Neben der Traverse 16 sind keine weiteren Elemente, insbesondere keine weiteren Tragelemente oder Tragstrukturen zwischen den beiden Achsen 14 ausgebildet. Die Achsen 14 sind ausschließlich über die mittig angeordnete Traverse 16 miteinander verbunden. Insbesondere ist auch kein Fahrzeugboden vorgesehen.

Zumindest ein Rad 20 einer jeweiligen Achse 14 und vorzugsweise alle Räder 20 sind über hier nicht näher dargestellte Antriebe antreibbar, und zwar sind die Räder vorzugsweise unabhängig voneinander antreibbar. Ein Lenkeinschlag der Achsen 14 in Relation zur Traverse 16 erfolgt insbesondere ausschließlich durch den individuellen Antrieb der Räder 20.

Auf dem Fahrgestell 12 ist ein auch mehrteiliger Aufbau 24 angeordnet, welcher im Ausführungsbeispiel der FIG 1 ein Werkzeug 26 umfasst, das beispielsweise zum Auflockern des Bodens oder zur mechanischen Entfernung von Unkraut und Beikraut ausgebildet ist. Das Werkzeug 26 weist hierzu insbesondere ein Teleskop-Gestänge auf, welches vorzugsweise an der Traverse 16 drehbar befestigt ist. An einem Ende ist ein Bearbeitungswerkzeug 28 wie beispielsweise eine Harke angebracht. Das gesamte Teleskop-Gestänge kann beispielsweise ergänzend auch bezüglich seines Befestigungspunktes an der Traverse 16 in Richtung zum Boden oder von diesem Weg gekippt werden. Wie speziell anhand der FIG 2 zu erkennen ist, kann das Werkzeug 26 mit mehreren Gelenken versehen sein. Im dargestellten Beispiel ist am Ende des Teleskop-Gestänges über ein Gelenk ein Arm angebracht, welcher endseitig das Bearbeitungswerkzeug 28 aufweist. Das Werkzeug 26 ist allgemein zur autonomen Bearbeitung ausgebildet und hierzu mit geeigneten Antrieben usw. versehen.

Allgemein weist der Roboter 10 eine Steuereinrichtung 30 auf, über die insbesondere die nachfolgend noch im Detail beschriebenen Fahrmanöver und vorzugsweise auch die autonome (Feld-) Bearbeitung mit Hilfe des Werkzeugs 26 automatisiert gesteuert werden. Schließlich ist am Fahrgestell 12 als Teil des Aufbaus 24 noch ein Energiespeicher 32, speziell eine Batterie oder auch ein (Wasserstoff-) Tank angebracht, über die eine autarke insbesondere elektrische Energieversorgung sowohl für die Steuereinrichtung 30 als auch für die unterschiedlichen Antriebe, insbesondere auch für die Fahrantriebe für die Räder 20 bereitgestellt ist. In einer Ausführungsvariante weist der Roboter 10 eine Brennstoffzelle auf, über die elektrische Energie aus einem Energieträger wie Wasserstoff erzeugt wird.

Der Roboter 10 ist dabei Teil eines Robotersystems, zudem neben dem zumindest einen Roboter 10 zumindest noch eine Versorgungseinrichtung 34 zugehörig ist, die vorzugsweise am Rand des Feldes 2 positioniert ist. Bei dieser handelt es sich beispielsweise um eine Ladestation, mit deren Hilfe der Energiespeicher 32 aufgeladen werden kann.

Alternativ oder ergänzend zu dem dargestellten Werkzeug 26 weist der Aufbau 24 beispielsweise eine Ausbringungsvorrichtung für ein Ausbringmittel wie Dünger oder Saatgut auf. Über die Versorgungseinrichtung 34 wird dann beispielsweise ein entsprechender Vorratsbehälter, welcher Teil des Aufbaus 24 ist, an der Versorgungseinrichtung 34 aufgefüllt. Allgemein ist der Roboter 10 dafür ausgelegt, dass er diese Versorgungseinrichtung 34 bei Bedarf automatisch und autonom anfährt und den Energiespeicher 32 und/oder oder den Vorratsbehälter auffüllt.

Wie aus der Darstellung der FIG 2 gut zu erkennen ist, sind die beiden Achsen 14 jeweils unterhalb der Traverse 16 und die Räder 20 wiederum unterhalb der beiden Achsen 14 angeordnet. Die Räder 20 können daher unterhalb der Achsen 14 um die jeweilige Lenkachse 22 um vorzugsweise zumindest 180° oder auch um beispielsweise 360° oder auch darüber hinaus verdreht werden. Weiterhin können auch die beiden Achsen 14 unterhalb der Traverse 16 um ihre Drehachse verdreht werden, und zwar ebenfalls vorzugsweise um zumindest 180°. Eine jeweilige Achse 14 ist dabei insbesondere parallel zur Traverse 16 ausrichtbar.

Der Roboter 10 zeichnet sich allgemein durch eine kleinbauende Weise und auch geringes Gewicht aus. Die Länge der Achsen 14 als auch die der Traverse 16 ist an den Reihenabstand b angepasst und liegt beispielsweise bei maximal 100 cm, maximal 75 cm oder maximal 50 cm. Die Räder 20 weisen einen Durchmesser von beispielsweise 10 cm bis 40 cm und insbesondere im Bereich von 15 cm bis 30 cm auf. Grundsätzlich kann der Durchmesser und damit die Bodentiefe des Fahrgestells 12 eingestellt werden. Als Bodentiefe wird der Abstand der Unterseite der Traverse 16 zum Boden verstanden. Diese Bodentiefe liegt beispielsweise im Bereich von 15 cm bis 60 cm, vorzugsweise im Bereich von 20 cm bis 35 cm.

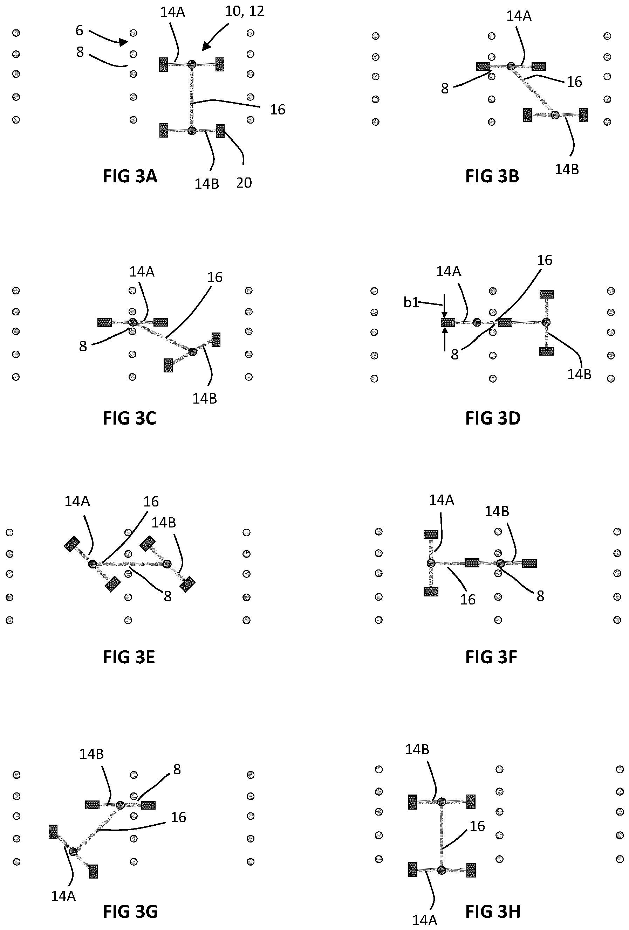

Die FIG 1 sowie FIG 3A zeigen jeweils eine Normal- oder Ausgangsposition des Fahrgestells 12, bei dem die beiden Achsen 14 parallel zueinander und senkrecht zur Traverse 16 angeordnet sind und die Räder 20 in Richtung der Traverse 16 ausgerichtet sind. In der Ausgangsposition sind daher die Achsen 14 mit der Traverse 16 H-förmig ausgerichtet.

Der Roboter 10 ist insgesamt als ein autonomes, selbstfahrendes Fahrzeug ausgebildet. Durch seinen besonderen Aufbau ist er in der Lage, auf dem Feld 2 frei zu verfahren, ohne die gesäten Pflanzen zu überrollen bzw. zu beschädigen. Das Fahrgestell 12 kann als eine Art Trägerfahrzeug angesehen werden, das mit verschiedenen technischen Mitteln insbesondere modular ausrüstbar ist, beispielsweise mit dem dargestellten Werkzeug 26 zur mechanischen Un- und Beikrautbekämpfung. In einer weiteren Ausführungsform kann der Roboter 10 mit diversen Tanks und Vorratsbehältern bestückt sein, in denen sich Dünger, Herbizide o.Ä. befinden. In einer weiteren Ausführungsform sind Sensoren angebracht, die Daten über das Feld 2, die Pflanzen, den Boden usw. sammeln.

Der besondere Vorteil des Roboters 10 liegt insbesondere in der Art und Weise wie er sich auf dem Feld 2 fortbewegt, ohne die Pflanzen 4 zu überfahren bzw. zu beschädigen. Insbesondere ist der Roboter 10 derart ausgebildet, dass er zwischen den Reihen 6 fahren kann, um so z.B. Beikräuter zu entfernen. Der Roboter 10 ist in der Lage, die Reihen 6 zu wechseln, ohne dass er bestehende Pflanzen 4 überfährt. Der Roboter 10 ist in der Lage, sich in den Abmessungen und der Geometrie so zu verändern, dass er zwischen zwei Pflanzen 4 hindurch fahren kann, ohne diese zu überrollen.

Anhand der FIG 3A bis FIG 3H wird nachfolgend ein mögliches Fahrmanöver zum Queren einer Reihe 6 erläutert:
Im Ausgangszustand (FIG 3A) steht das Fahrgestell 12 und damit der Roboter 10 zwischen zwei Reihen 6. Das Fahrgestell 12 ist so dimensioniert, dass es in der Breite immer zwischen zwei Reihen 6 passt, ohne die Pflanzen 4 zu beschädigen. Zwischen den Reihen 6 fährt der Roboter 10 autonom auf und ab, um die gestellte Aufgabe zu erledigen, wie z.B. Unkraut entfernen oder Daten sammeln. Erreicht der Roboter 10 einen Feldrand oder eine zur Fahrtrichtung quer gesäte Reihe, auch Vorgewende in der Landwirtschaft genannt, wird ein Querfahrmanöver eingeleitet, mit dem Ziel, die fertig bearbeitete Reihe 6 zu queren um zu einer benachbarten Reihe zu gelangen, um diese bearbeiten zu können. Der Wechsel von der einen zur anderen Reihe 6 erfolgt zwischen die Pflanzen 4 hindurch, ohne sie zu beschädigen. Dazu wird die Ausrichtung des Ausgangszustandes mit Hilfe der beweglichen und angetriebenen Elemente des Fahrgestells 12 geeignet verändert, während der Roboter 10 zwischen die Pflanzen 4 hindurch zu der benachbarten Reihe 6 manövriert wird.

Die einzelnen Schritte beim Fahrmanöver sind wie folgt:
Ausgehend von der H-förmigen Ausgangsstellung (FIG 3A) lenken die Räder 20 der Vorderachse 16A zunächst um ihre jeweilige Lenkachse um 90° ein. Anschließend fährt die Vorderachse 14A zwischen zwei Pflanzen 4 in eine Lücke 8 ein und beginnt mit der Querung der Reihe 6. Die Vorderachse 14A fährt teilweise durch die Lücke 8 hindurch (FIG 3B). Während sich die Vorderachse 14A noch zwischen den Pflanzen 4 befindet, lenkt die Hinterachse 14B sowie deren Räder 20 ein, so dass die Hinterachse 14B etwas schräggestellt ist (FIG 3C). Die Räder 20 sind dabei insbesondere noch in Richtung der Reihe 6 orientiert.

Anschließend fährt die Hinterachse 14B in Richtung zur Vorderachse 14A. Dabei werden beide Achsen 14A, 14B sukzessive weiter um ihre Drehachsen 18 verdreht, bis eine Querfahrposition erreicht ist. Bei dieser ist die Vorderachse 14A parallel zur Traverse 16 ausgerichtet. Weiterhin ist in der Querfahrposition die Hinterachse 14B vorzugsweise im 90°-Winkel zur Vorderachse 14A orientiert ist, so dass das Fahrgestell 12 insgesamt eine T-förmige Konfiguration einnimmt (FIG 3D). In dieser Position (Stabilisierungsposition) stabilisiert die Hinterachse 14B das Fahrgestell 12.

In der Querfahrposition weist das Fahrgestell 12 im Bereich der Vorderachse 14A eine Breite b1 auf, die kleiner oder gleich dem Pflanzabstand a ist. Weiterhin weist der Aufbau 24 eine (maximale) Breite b2 auf (vgl. hierzu FIG 1), die beispielsweise kleinergleich der Breite b1 oder optional etwas größer als die Breite b1 ist. Sie ist ausreichend klein, um eine Beschädigung der Pflanzen 4 zu vermeiden.

Ausgehend von der Querfahrposition in FIG 3D fährt die Vorderachse 14A vollständig durch die Lücke 8 hindurch und hat dann die Reihe 6 gequert. Anschließend dreht sich die Vorderachse 14A um ihre Drehachse 18 in Richtung zur Stabilisierungsposition, in der sie quer zur Traverse 16 ausgerichtet wird. Gleichzeitig lenkt auch die Hinterachse 14B ein und dreht um ihre Drehachse 18. In einer Zwischenstellung (FIG 3E) sind beide Achsen 14 schräg zur Traverse 16 orientiert.

Anschließend wird erneut eine Querfahrposition erreicht, bei der nunmehr jedoch die Hinterachse 14B parallel zur Traverse 16 orientiert ist und die Vorderachse 14A sich in der Stabilisierungsposition befindet. Das Fahrgestell 12 fährt in Längsrichtung der Traverse 16, so dass nunmehr die Hinterachse 14B in die Lücke 8 einfährt (FIG 3F).

Ähnlich wie zur FIG 3C lenken nachfolgend - wenn z.B. die Hinterachse zur Hälfte durch die Reihe 6 gefahren ist - die Räder 20 der Vorderachse 14A sowie die Vorderachse 14A ein, so dass die Vorderachse 14A schräg gestellt ist und gleichzeitig die Räder 20 in Richtung der Reihen 6 orientiert sind (FIG 3G). Die Vorderachse 14A fährt dann in Richtung der Reihe 6 weiter und die Hinterachse 14B fährt vollständig durch die Reihe 6 hindurch.

Sobald die Hinterachse 14B vollständig durchgefahren ist, geht das Fahrgestell 12 wieder in die H-förmige Ausgangsposition. Hierzu werden die Räder 20 der Hinterachse 14B aus ihrer Querstellung in der Querfahrposition um 90° eingelenkt, bis sie wieder in der normalen Position senkrecht zur Hinterachse 14B orientiert sind (FIG 3H)
Mit dieser Art und Weise ist es möglich, ein vermeintlich zu großes Gerät zwischen die Pflanzen 4 zu steuern, ohne diese zu überfahren. Das Fahrgestell 12 zusammen mit dem Aufbau 24 und sämtlichen Anbauteilen sind dabei derart ausgelegt, dass ihre Breite bevorzugt nicht oder allenfalls geringfügig breiter ist, als der Abstand a zwischen den Pflanzen. Damit wird eine Beschädigung der Pflanzen 8 vermieden. Der Aufbau 24 kann in die Höhe oder in die Länge bauen bzw. klappbar ausgeführt sein.

Sind die Pflanzen 4 noch nicht so hochgewachsen oder bei Pflanzenkulturen mit allgemein niedriger Höhe kann der Wechsel der Reihen 6 auch einfacher ausgeführt sein. Hierfür ist für das Querfahrmanöver ausreichend und vorgesehen, wenn lediglich alle vier Räder 20 um 90° einlenken, um dann mit einer Querfahrt die Reihe 6 zu queren. Bei niedriger Pflanzenhöhe beschädigt die Traverse 16 die Pflanzen nicht. Es muss lediglich darauf geachtet werden, dass die Achsen 14 zwischen die Pflanzen 4 durch unterschiedliche Lücken 8 manövriert werden. Bei Bedarf dreht eine oder drehen beide Achsen 14 etwas um ihre Drehachse 18, so dass die Traverse 16 schräg gestellt wird und der Abstand zwischen den beiden Achsen verringert wird, um diesen an den Abstand zwischen den beiden Lücken anzupassen, durch die die beiden Achsen 14 fahren sollen.

Das hier beschriebene Verfahren ist auf sämtliche Pflanzensorten anwendbar, insbesondere auf Reihenkulturen wie Mais, Zuckerrüben oder im Gemüseanbau. Hier ist auch ein Einsatz in Gewächshäusern denkbar, die insofern eine zu bearbeitende landwirtschaftliche Fläche definieren.

Alternativ zu den dargestellten Reifen als Räder 20 können auch Raupenlaufwerke, Ketten o.Ä. verwendet werden. Diese werden vorliegend allesamt unter den Begriff "Räder" subsumiert.

Das Werkzeug 26 für die mechanische Un- und Beikrautbekämpfung ist insbesondere derart ausgeführt, dass in der Reihe 6 und zwischen den Pflanzen 4 gehackt/gestriegelt/das Unkraut entfernt werden kann. Um zwischen den Pflanzen das Unkraut zu entfernen, erlaubt das Werkzeug 26 eine seitliche Bewegung des Hack-/Bearbeitungswerkzeugs 28, sodass diese zwischen den Pflanzen 4 hin und her bewegt wird. Es wird daher insbesondere auf ein drehendes Werkzeug ("Fingerwerkzeug") verzichtet. Alternativ kann auch ein solches drehendes Werkzeug eingesetzt werden.

In einer weiteren Ausführungsform ist der Roboter 10 mit Sensoren ausgestattet, die beispielsweise die gesäten Pflanzen 4 erkennen und von Bei- oder Unkräutern unterscheiden. Zudem wird über die Sensorik beispielsweise die zu fahrende Strecke ermittelt. Weiterhin werden anhand der Sensorik vorzugsweise Aussagen über den Zustand der Pflanzen 4 und des Pflanzenwachstum getroffen, um zukünftige Ernteerträge zu kalkulieren.

In einer weiteren Ausführungsform ist das Fahrgestell 12 mit einem Tank sowie mit einer Ausbringvorrichtung bestückt, über die ein Ausbringmittel, wie Dünger oder Mittel zur chemischen Unkrautbekämpfung, insbesondere mithilfe der Sensorik gezielt, bedarfsgerecht und bodennah an die Pflanzen abgegeben werden. Das spart chemische Mittel wie Dünger, Pestizide, Herbizide, o.Ä. ein und belastet die Umwelt weniger stark.

In einer weiteren Ausführungsform ist das Fahrgestell 12 mit Sensoren, Werkzeugen und ggf. auch einem Analysegerät bestückt, um Bodenproben zu entnehmen und sie vorzugsweise an Ort und Stelle zu analysieren. Der Roboter 10 kann zum einen so ausgeführt sein, dass lediglich Bodenproben entnommen werden können und zum anderen, dass die genommenen Bodenproben direkt mit den Analysegeräten am Roboter 10 analysiert werden können, ohne ein weiteres Hilfsgerät nutzen zu müssen. Die Entnahme der Bodenproben und vorzugsweise deren Auswertung erfolgen vollautomatisch. Die Ergebnisse werden in einem Speicher lokal am Roboter 10 abgespeichert oder alternativ über ein Datenübertragungssystem an eine entfernte Verarbeitungsstation übertragen.

In einer weiteren Ausführungsform ist der Roboter 10 mit dem erwähnten Datenübertragungssystem ausgestattet, das, vorzugsweise kabellos, Live-Daten und gesammelte Informationen an einen zentralen Ort/Rechner (Verarbeitungsstation) übermitteln kann.

In einer weiteren Ausführungsform ist der Roboter mit Kameras ausgestattet. Mit deren Hilfe wird in bevorzugter Ausgestaltung die Arbeit des Roboters 10 von einem entfernten Ort beispielsweise via PC, Tablet, Smartphone, etc. kontrolliert.

In einer weiteren Ausführungsform besitzt der Roboter einen manuellen Betrieb, mit dem das Fahrzeug vor Ort oder von einem entfernten Ort via PC, Tablet, etc. gesteuert werden kann. Dies könnte z.B. im Falle eines Steckenbleibens den Weg des Betreibers zum Feld einsparen.

In einer weiteren Ausführungsform ist der Roboter 10 mit einem Live-Tracking-System ausgestattet, damit die Position des Roboters 10 immer bekannt ist.

Der Antrieb kann durch sämtliche bekannte Technologien erfolgen, wie z.B. durch einen Verbrennungsmotor, Elektromotor, etc.. Vorzugsweise ist der Antrieb mit umweltfreundlicher Technik ausgeführt, insbesondere als Elektroantrieb und/oder mit einer Brennstoffzelle und Wasserstoffantrieb oder mit Solar- und Photovoltaiktechnik zur Energieversorgung.

Wie zur FIG 1 bereits beschrieben, ist gemäß einer bevorzugten Variante Teil des Robotersystems am Feldrand eine als Tank- oder Wechselstelle ausgebildete Versorgungseinrichtung 34 angebracht, an der der Roboter 10 seinen Tank oder Akku, o.Ä. auffüllen, laden oder wechseln kann. Vorzugsweise geschieht dies voll autonom.

In einer weiteren bevorzugten Ausgestaltung des Robotersystems ist ein Versorgungsfahrzeug vorgesehen, welches dafür ausgelegt ist, zwischen der Versorgungseinrichtung 34 und dem Roboter 10 zu pendeln, der das Feld 2 gerade bearbeitet. Das Versorgungsfahrzeug liefert/versorgt den Roboter 10 insbesondere mit Energie, damit der Roboter 10 nicht zur Versorgungseinrichtung 34 fahren muss. Bevorzugt wird bei Bedarf über das oder ein weiteres Versorgungsfahrzeug auch ein Ausbringmittel zum Roboter 10 gebracht. Allgemein wird dieser daher über das Versorgungsfahrzeug automatisch betankt und aufgefüllt.

In einer weiteren Ausführungsform umfasst das Robotersystem mehrere Roboter 10 sowie ggf. auch mehrere Versorgungsfahrzeuge, die auf dem Feld 2 eingesetzt werden, um die Arbeit schneller zu erledigen.

In einer bevorzugten weiteren Ausgestaltung des Robotersystems ist eine Transportvorrichtung vorgesehen, mit deren Hilfe der oder die Roboter 10 sowie ggf. die Versorgungseinrichtung 34 und die Versorgungsfahrzeuge einfach und schnell zum nächsten Feld 2 transportiert werden können. Die Transportvorrichtung ist vorzugsweise auf mehrere Fahrzeuge und Einheiten (Roboter, Versorgungseinrichtung, Versorgungsfahrzeuge) skalierbar. Die Transportvorrichtung ist insbesondere derart ausgeführt, dass sie u.a. mithilfe eines Traktors oder Anhängers bewegt werden kann.

Das Fahrgestell 12 ist nicht auf die dargestellte Variante mit den beiden Achsen 14 beschränkt. Das Fahrgestell 12 ist beispielsweise auf mehrere Achsen inklusive Rotationsachsen, Traversen und Räder erweiterbar. Somit kann das Fahrgestell 12 mehr und/oder größere Aufbau-Teile (Werkzeuge, Tanks....) mitführen.

Das Fahrgestell 12 ist vorzugsweise weiterhin mit sich selbst koppelbar, sodass mindestens zwei Einheiten zu einer größeren Einheit gekoppelt werden können. Dieses Konzept stellt einen modularen Aufbau dar, der jederzeit mit Modulen erweiterbar oder wieder zerlegbar ist, je nach Anwendungsfall.

Auch ein Anhänger mit z.B. nur einem nachlaufenden Rad kann in die modulare Bauweise miteinbezogen werden.

In einer weiteren Ausführungsform ist der Roboter 10 derart ausgebildet, dass organischer Dünger wie Gülle oder Mist in den Boden eingearbeitet werden kann, insbesondere dann, wenn in den Bestand (Pflanzen haben schon ein entsprechendes Wachstum) der Dünger ausgebracht wird.

Die vorstehend beschriebenen unterschiedlichen Ausgestaltungen sind beliebig miteinander kombinierbar.

Der hier beschriebene Roboter 10 sowie das Robotersystem weisen insbesondere folgende Vorteil auf:
- Bearbeitung des gesamten Feldes möglich, ohne dass eine einzige Pflanze 4 überfahren bzw. beschädigt/verletzt wird, was sich positiv auf den Ertrag auswirkt;
- Aufgrund der kleinen Abmessungen und des geringen Gewichtes entsteht wenig Bodenverdichtung, was sich positiv auf den Ertrag auswirkt;
- Querung durch eine Reihe 6 hindurch möglich;
- Allgemeine Unkrautbekämpfung (mechanisch oder mit chemischen Mitteln) zwischen den Reihen 6 und insbesondere in der Reihe 6 bzw. zwischen den Pflanzen 4 möglich;
- Der Roboter 10 kann nahezu wetterunabhängig im Feld 2 eingesetzt werden; aufgrund des geringen Gewichtes kann die Erfindung auch in nassen und schlammigen Bedingungen eingesetzt werden
- Zeitunabhängiger 24/7-Betrieb möglich, ohne menschliche Anwesenheit/Überwachung;
- Entlastung des Menschen (Landwirt, etc..);
- Häufigere Bearbeitung des Bodens möglich, demnach kann das Unkraut und das Beikraut nicht tief verwurzelt sein, wodurch ein energiesparendes Hacken erreicht ist, da Hackwerkzeug nicht so tief in den Boden eintauchen m uss;
- Flache Bodenbearbeitung, um Boden zu lüften und aufnahmefähiger für Wasser, Mineralien, etc. zu machen, wodurch eine Ertragssteigerung erreicht wird;
- Umweltschonender Antrieb, beispielsweise Wasserstoffantrieb möglich; Wasserstoff als Treibstoff kann von Landwirten mit Photovoltaikanlagen oder Biogasanlagen selbst hergestellt werden.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung gemäß dem Gegenstand der Ansprüche zu verlassen. Speziell ist die Erfindung nicht auf die im Ausführungsbeispiel beschriebenen Fahrmanöver begrenzt. Es können durch andere Ansteuerungen auch andere Fahrmanöver speziell mit dem hier beschriebenen Fahrgestell oder einem modifizierten Fahrgestell durchgeführt werden.

### Bezugszeichenliste

- 2: Feld
- 4: Pflanzen
- 6: Reihe
- 8: Lücke
- 10: Roboter
- 12: Fahrgestell
- 14: Achse
- 14A: Vorderachse
- 14B: Hinterachse
- 16: Traverse
- 18: Drehachse
- 20: Rad
- 22: Lenkachse
- 24: Aufbau
- 26: Werkzeug
- 28: Bearbeitungswerkzeug
- 30: Steuereinrichtung
- 32: Energiespeicher
- 34: Versorgungseinrichtung

- a: Pflanzenabstand
- b: Reihenabstand
- b1: Breite in der Querfahrposition
- b2: Breite Aufbau

## Patentansprüche

1. Roboter (10) zur autonomen Bearbeitung einer landwirtschaftlichen Fläche mit in Reihen (6) angeordneten Pflanzen, mit
- einem Fahrgestell (12), welches zwei Achsen (14, 14A, 14B) aufweist, nämlich eine Hinterachse (14B) sowie eine Vorderachse (14A), die über eine mittige Traverse (16) miteinander verbunden sind, wobei eine jeweilige Achse (14, 14A, 14B) jeweils an der Traverse (16) um eine Drehachse (18) lenkbar angeordnet ist und wobei jede Achse (14, 14A, 14B) zwei lenkbare Räder (20) aufweist, die um eine Lenkachse (22) drehbar sind und von denen zumindest eines antreibbar ist,
- einem am Fahrgestell (12) anbringbaren Aufbau (24), welcher wahlweise oder in Kombination ein autonom betätigbares Werkzeug (26) zur Feldbearbeitung aufweist, eine Sensorik oder ein Analysegerät aufweist, oder zur Aufnahme von einem Ausbringmittel ausgebildet ist,
- einer Steuereinrichtung (30) eingerichtet zur Ansteuerung des Fahrgestells (12) und zur Durchführung von autonomen Fahrmanövern, so dass für einen Reihenwechsel quer über eine Reihe (6) hinweg mit Hilfe der Steuereinrichtung (30) ein Querfahrmanöver durchführbar ist, bei dem die Räder (20) um ihre Lenkachse (22) und die Achsen (14, 14A, 14B) jeweils um ihre Drehachse (18) verdreht werden.

2. Roboter (10) nach dem vorhergehenden Anspruch, wobei jede der beiden Achsen (14, 14A, 14B) in eine Querfahrposition bringbar ist, in der die jeweilige Achse (14, 14A, 14B) sowie deren Räder (20) parallel zur Traverse (16) ausgerichtet sind.

3. Roboter (10) nach dem vorhergehenden Anspruch, wobei in der Querfahrposition das Fahrgestell (12) im Bereich der Achse (14, 14A, 14B), die parallel zur Traverse (16) ausgerichtet ist, eine Breite (b1) von maximal 30 cm, insbesondere von maximal 20 cm oder maximal 10 cm bis 15 cm aufweist.

4. Roboter (10) nach einem der vorhergehenden Ansprüche, wobei der Aufbau (24) eine Breite (b2) von maximal 50 cm, insbesondere von maximal 40 cm, maximal 25 cm oder maximal 10 - 15 cm aufweist oder auf eine solche Breite reduzierbar ist.

5. Roboter (10) nach einem der vorhergehenden Ansprüche, wobei
- die Räder (20) parallel zur jeweiligen Achse (14, 14A, 14B) ausrichtbar und unterhalb der jeweiligen Achse (14, 14A, 14B) angeordnet sind und bevorzugt um zumindest 180° und speziell um 360° um die Lenkachse (22) drehbar sind und/oder
- die Achsen (14, 14A, 14B) unterhalb der Traverse (16) angeordnet sind, so dass eine jeweilige Achse (14, 14A, 14B) unterhalb der Traverse (16) um die Drehachse (18) verdreht werden kann.

6. Roboter (10) nach einem der vorhergehenden Ansprüche, wobei die Steuereinrichtung (30) zur Durchführung eines Fahrmanövers ausgebildet ist, bei dem das Fahrgestell (12) einen Wechsel zwischen den Reihen (6) ausführt und hierbei eine jeweilige Achse (14, 14A, 14B) mit den zugehörigen Rädern (20) durch eine Lücke zwischen zwei Pflanzen der Reihe (6) manövriert wird.

7. Roboter (10) nach dem vorhergehenden Anspruch, wobei die Steuereinrichtung (30) derart eingerichtet ist, dass die Achsen (14, 14A, 14B) durch verschiedene Lücken manövriert werden, wobei bei Bedarf die beiden Achsen (14, 14A, 14B) durch Verdrehen um ihre Drehachsen (18) parallel zueinander versetzt werden, um den Abstand der Achsen (14, 14A, 14B) in Übereinstimmung mit einem Abstand der Lücken zu bringen.

8. Roboter (10) nach dem Anspruch 6, wobei die Steuereinrichtung (30) derart eingerichtet ist, dass beide Achsen (14, 14A, 14B) durch die gleiche Lücke manövriert werden.

9. Roboter (10) nach einem der Ansprüche 6 bis 8 und nach Anspruch 2, wobei die Steuereinrichtung (30) derart eingerichtet ist, dass zum Durchfahren der Lücke eine jeweilige Achse (14, 14A, 14B) mit den Rädern (20) in die Querfahrposition gebracht wird, wobei vorzugsweise die Traverse (16) bei einem Einfahren der Achse (14, 14A, 14B) in die Lücke und/oder vor einem vollständigen Herausfahren der Achse (14, 14A, 14B) aus der Lücke schräg zur Achse (14, 14A, 14B) gestellt wird.

10. Roboter (10) nach dem vorhergehenden Anspruch, wobei die jeweils andere Achse (14, 14A, 14B) zu Stabilisierungszwecken quer zu der in der Querfahrfahrposition befindlichen Achse (14, 14A, 14B) ausgerichtet ist,

11. Roboter (10) nach einem der vorhergehenden Ansprüche, wobei das Werkzeug (26) in einer Linearbewegung quer zur Traverse (16) verfahrbar ist.

12. Roboter (10) nach einem der vorhergehenden Ansprüche, welcher mit ein oder mehreren der folgenden Einrichtungen ausgestattet ist:
- ein Datenübertragungssystem zur Übertragung von Daten zu einem entfernten Ort,
- ein Kamerasystem, wobei Kameradaten vorzugsweise zur Überwachung des Roboters (10) an einen entfernten Ort übertragbar sind,
- eine manuelle Steuerungseinrichtung für einen manuellen Betrieb oder für eine Fernsteuerung des Roboters (10),
- ein Tracking-System zur Nachverfolgung der aktuellen Position des Roboters (10).

13. Roboter (10) nach einem der vorhergehenden Ansprüche, welcher eine Kupplung zum Koppeln mit einem weiteren Roboter (10) oder einem Anhänger aufweist.

14. Robotersystem mit einem Roboter (10) nach einem der vorhergehenden Ansprüche, welches eine Versorgungseinrichtung für den Roboter (10) umfasst, die vom Roboter (10) anfahrbar ist und die zum insbesondere autonomen Auffüllen oder Austauschen eines am Roboter (10) befindlichen Speichers für Energie oder Ausbringmittel ausgebildet ist.

15. Verfahren zur autonomen Bearbeitung einer landwirtschaftlichen Fläche mit einem Roboter (10) nach einem der Ansprüche 1 bis 13, wobei die landwirtschaftliche Fläche in Reihen (6) angeordnete Pflanzen aufweist und die Reihen (6) zueinander einen Reihenabstand (b) aufweisen und die Pflanzen einer Reihe (6) zueinander einen Pflanzabstand (a) aufweisen, wobei der Roboter (10) ein Fahrgestell (12) mit zwei Achsen (14, 14A, 14B) aufweist, nämlich eine Hinterachse (14B) sowie eine Vorderachse (14A), die über eine mittige Traverse (16) miteinander verbunden sind, wobei eine jeweilige Achse (14, 14A, 14B) jeweils an der Traverse (16) um eine jeweilige Drehachse (18) lenkbar angeordnet ist und wobei jede Achse (14, 14A, 14B) zwei jeweils um eine Lenkachse (22) lenkbare Räder (20) aufweist, von denen zumindest eines antreibbar ist, wobei für einen autonomen Reihenwechsel des Roboters (10) quer über eine Reihe (6) hinweg die Räder (20) einer Achse (14, 14A, 14B) jeweils um ihre Lenkachse (22) und die Achsen (14, 14A, 14B) jeweils um ihre Drehachse (18) gedreht werden.

## Claims

1. Robot (10) for autonomously processing an agricultural area containing plants arranged in rows (6), comprising
- a chassis (12) having two axles (14, 14A, 14B), namely a rear axle (14B) and a front axle (14A), which are connected to one another by way of a central crossmember (16), wherein a respective axle (14, 14A, 14B) is arranged so as to be steerable at the crossmember (16) about an axis of rotation (18) and wherein each axle (14, 14A, 14B) has two steerable wheels (20) which are rotatable about a steering axis (22) and at least one of which is drivable,
- a construction (24) which is attachable to the chassis (12) and, selectively or in combination, has an autonomously actuatable tool (26) for processing fields, has a sensor system or an analysis device, or is designed to receive a spreading matter,
- a control device (30) configured to control the chassis (12) and to carry out autonomous driving manoeuvres, such that, for a change of row, a transverse driving manoeuvre is able to be carried out transversely over a row (6) with the aid of the control device (30), in which transverse driving manoeuvre the wheels (20) are each rotated about their steering axis (22) and the axles (14, 14A, 14B) are each rotated about their axis of rotation (18).

2. Robot (10) according to the preceding claim, wherein each of the two axles (14, 14A, 14B) is able to be brought to a transverse driving position in which the respective axle (14, 14A, 14B) and the wheels (20) thereof are oriented parallel to the crossmember (16).

3. Robot (10) according to the preceding claim, wherein, in the transverse driving position, the chassis (12) in the region of the axle (14, 14A, 14B), which is oriented parallel to the crossmember (16), has a width (b1) of at most 30 cm, in particular of at most 20 cm or at most 10 cm to 15 cm.

4. Robot (10) according to one of the preceding claims, wherein the construction (24) has a width (b2) of at most 50 cm, in particular of at most 40 cm, at most 25 cm or at most 10-15 cm, or is able to be reduced to such a width.

5. Robot (10) according to one of the preceding claims, wherein
- the wheels (20) are able to be oriented parallel to the respective axle (14, 14A, 14B) and are arranged below the respective axle (14, 14A, 14B) and are rotatable preferably through at least 180° and especially through 360° about the steering axis (22), and/or
- the axles (14, 14A, 14B) are arranged below the crossmember (16), such that a respective axle (14, 14A, 14B) can be rotated about the axis of rotation (18) below the crossmember (16).

6. Robot (10) according to one of the preceding claims, wherein the control device (30) is designed to carry out a driving manoeuvre in which the chassis (12) executes a change between the rows (6) and a respective axle (14, 14A, 14B) with the associated wheels (20) is manoeuvred through a gap between two plants of the row (6).

7. Robot (10) according to the preceding claim, wherein the control device (30) is configured in such a way that the axles (14, 14A, 14B) are manoeuvred through different gaps, wherein, as required, the two axles (14, 14A, 14B) are offset parallel to one another by rotation about their axes of rotation (18) in order to bring the spacing between the axles (14, 14A, 14B) in conformity with a spacing between the gaps.

8. Robot (10) according to Claim 6, wherein the control device (30) is configured in such a way that both axles (14, 14A, 14B) are manoeuvred through the same gap.

9. Robot (10) according to one of Claims 6 to 8 and according to Claim 2, wherein the control device (30) is configured in such a way that, in order to drive through the gap, a respective axle (14, 14A, 14B) with the wheels (20) is brought to the transverse driving position, wherein, preferably, the crossmember (16) is in an inclined position relative to the axle (14, 14A, 14B) when the axle (14, 14A, 14B) is being driven into the gap and/or before the axle (14, 14A, 14B) has driven completely out of the gap.

10. Robot (10) according to the preceding claim, wherein, for stabilization purposes, the respectively other axle (14, 14A, 14B) is oriented transversely with respect to the axle (14, 14A, 14B) which is in the transverse driving position.

11. Robot (10) according to one of the preceding claims, wherein the tool (26) is movable in a linear movement transversely with respect to the crossmember (16).

12. Robot (10) according to one of the preceding claims, equipped with one or more of the following devices:
- a data transmission system for transmitting data to a remote location,
- a camera system, wherein camera data preferably for monitoring the robot (10) are transmittable to a remote location,
- a manual control device for manual operation or for remote control of the robot (10),
- a tracking system for tracking the current position of the robot (10).

13. Robot (10) according to one of the preceding claims, having a coupling for coupling to a further robot (10) or a trailer.

14. Robot system comprising a robot (10) according to one of the preceding claims, comprising a supply device for the robot (10), said supply device being able to be approached by the robot (10) and being designed for in particular autonomous filling or exchanging of a store for energy or spreading matter that is located on the robot (10).

15. Method for autonomously processing an agricultural area with a robot (10) according to one of Claims 1 to 13, wherein the agricultural area has plants arranged in rows (6) and the rows (6) have a row spacing (b) to one another and the plants of a row (6) have a plant spacing (a) to one another, wherein the robot (10) comprises a chassis (12) having two axles (14, 14A, 14B), namely a rear axle (14B) and a front axle (14A), which are connected to one another by way of a central crossmember (16), wherein a respective axle (14, 14A, 14B) is arranged so as to be steerable at the crossmember (16) about an axis of rotation (18) and wherein each axle (14, 14A, 14B) has two wheels (20) which are each steerable about a steering axis (22) and at least one of which is drivable, wherein, for an autonomous change of row of the robot (10) transversely over a row (6), the wheels (20) of an axle (14, 14A, 14B) are each rotated about their steering axis (22) and the axles (14, 14A, 14B) are each rotated about their axis of rotation (18).

## Revendications

1. Robot (10) pour le traitement autonome d'une surface agricole avec des plantes disposées en rangées (6), comprenant
- un châssis (12) qui présente deux essieux (14, 14A, 14B), à savoir un essieu arrière (14B) ainsi qu'un essieu avant (14A), qui sont reliés entre eux par une traverse centrale (16), un essieu respectif (14, 14A, 14B) est respectivement agencé sur la traverse (16) de manière à être apte à être dirigé autour d'un axe de rotation (18), et chaque essieu (14, 14A, 14B) présentant deux roues directionnelles (20) qui sont rotatives autour d'un axe de direction (22) et dont au moins une est apte à être entraînée,
- une structure (24) apte à être montée sur le châssis (12), qui présente au choix ou en combinaison un outil (26) apte à être actionné de manière autonome pour le traitement dans le champ, qui présente un système de capteurs ou un appareil d'analyse, ou qui est conçue pour recevoir un moyen d'épandage,
- un dispositif de commande (30) conçu pour commander le châssis (12) et pour effectuer des manoeuvres de conduite autonomes, de sorte que, lors d'un changement de rangée transversalement sur une rangée (6), une manoeuvre de conduite transversale puisse être effectuée en utilisant le dispositif de commande (30), manoeuvre lors de laquelle les roues (20) sont tournées autour de leur axe de direction (22) et les essieux (14, 14A, 14B) sont tournés chacun autour de leur axe de rotation (18).

2. Robot (10) selon la revendication précédente, dans lequel chacun des deux essieux (14, 14A, 14B) est apte à être amené dans une position de déplacement transversal dans laquelle l'essieu respectif (14, 14A, 14B) ainsi que ses roues (20) sont orientés parallèlement à la traverse (16) .

3. Robot (10) selon la revendication précédente, dans lequel, en position de déplacement transversal, le châssis (12) présente, au niveau de l'essieu (14, 14A, 14B) orienté parallèlement à la traverse (16), une largeur (b1) de 30 cm maximum, notamment de 20 cm maximum ou de 10 cm à 15 cm maximum.

4. Robot (10) selon l'une des revendications précédentes, dans lequel la structure (24) présente une largeur (b2) d'au plus 50 cm, notamment d'au plus 40 cm, d'au plus 25 cm ou d'au plus 10 à 15 cm, ou est apte à être réduite à une telle largeur.

5. Robot (10) selon l'une des revendications précédentes, dans lequel
- les roues (20) sont aptes à être orientées parallèlement à l'essieu respectif (14, 14A, 14B) et sont agencées sous l'essieu respectif (14, 14A, 14B) et sont de préférence aptes à tourner sur au moins 180° et plus particulièrement sur 360°, autour de l'axe de direction (22) et/ou
- les essieux (14, 14A, 14B) sont agencés en dessous de la traverse (16), de sorte qu'un essieu respectif (14, 14A, 14B) est apte à tourner autour de l'axe de rotation (18) en dessous de la traverse (16).

6. Robot (10) selon l'une des revendications précédentes, dans lequel le dispositif de commande (30) est configuré pour effectuer une manoeuvre de déplacement dans laquelle le châssis (12) effectue un changement entre les rangées (6) et dans lequel un essieu respectif (14, 14A, 14B) avec les roues associées (20) est manoeuvré à travers un espacement entre deux plantes de la rangée (6) .

7. Robot (10) selon la revendication précédente, dans lequel le dispositif de commande (30) est agencé de telle sorte que les essieux (14, 14A, 14B) sont manoeuvrés à travers différents espacements, les deux essieux (14, 14A, 14B) étant, si nécessaire, décalés parallèlement l'un par rapport à l'autre par rotation autour de leurs axes de rotation (18) afin de faire coïncider l'écartement des essieux (14, 14A, 14B) avec un écartement des espacements.

8. Robot (10) selon la revendication 6, dans lequel le dispositif de commande (30) est agencé de manière à ce que les deux essieux (14, 14A, 14B) soient manoeuvrés à travers le même espace.

9. Robot (10) selon l'une des revendications 6 à 8 et selon la revendication 2, dans lequel le dispositif de commande (30) est agencé de telle sorte que, pour franchir l'espace, un essieu respectif (14, 14A, 14B) est amené en position de déplacement transversal par les roues (20), la traverse (16) étant de préférence inclinée par rapport à l'essieu (14, 14A, 14B) lors d'une entrée de l'essieu (14, 14A, 14B) dans l'espacement et/ou avant une sortie complète de l'essieu (14, 14A, 14B) hors de l'espace.

10. Robot (10) selon la revendication précédente, dans lequel l'autre essieu (14, 14A, 14B) est orienté transversalement par rapport à l'essieu (14, 14A, 14B) en position de déplacement transversal, à des fins de stabilisation.

11. Robot (10) selon l'une des revendications précédentes, dans lequel l'outil (26) est déplaçable selon un mouvement linéaire transversal à la traverse (16) .

12. Robot (10) selon l'une des revendications précédentes, qui est équipé d'un ou plusieurs des dispositifs suivants :
- un système de transmission de données pour transmettre des données à un endroit éloigné,
- un système de caméra, les données de la caméra étant aptes à être transmises à un endroit éloigné, de préférence pour la surveillance du robot (10),
- un système de commande manuelle pour un fonctionnement manuel ou pour une commande à distance du robot (10),
- un système de suivi pour suivre la position actuelle du robot (10).

13. Robot (10) selon l'une des revendications précédentes, qui comporte un attelage pour une liaison à un autre robot (10) ou à une remorque.

14. Système robotique avec un robot (10) selon l'une des revendications précédentes, qui comprend un dispositif d'alimentation pour le robot (10), qui est apte à être approché par le robot (10) et qui est conçu pour remplir ou remplacer, en particulier de manière autonome, un réservoir d'énergie ou de produits d'application se trouvant sur le robot (10).

15. Procédé de traitement autonome d'une surface agricole avec un robot (10) selon l'une des revendications 1 à 13, dans lequel la surface agricole présente des plantes disposées en rangées (6) et les rangées (6) présentent entre elles un espacement (b) et les plantes d'une rangée (6) présentent entre elles un espacement (a), le robot (10) comprend un châssis (12) avec deux essieux (14, 14A, 14B), à savoir un essieu arrière (14B) ainsi qu'un essieu avant (14A), qui sont reliés entre eux par une traverse centrale (16), un essieu respectif (14, 14A, 14B) étant agencé respectivement sur la traverse (16) de manière à pouvoir être dirigé autour d'un axe de rotation respectif (18) et chaque essieu (14, 14A, 14B) présentant deux roues (20) aptes à être dirigées respectivement autour d'un axe de direction (22), dont au moins une est apte à être entraînée, les roues (20) d'un essieu (14, 14A, 14B) étant respectivement tournées autour de leur axe de direction (22) et les essieux (14, 14A, 14B) étant respectivement tournés autour de leur axe de rotation (18) pour un changement de rangée autonome du robot (10) transversalement sur une rangée (6).
